# EUROPEAN PATENT SPECIFICATION

(11) **EP 3 618 140 B1**
(45) Date of publication and mention of the grant of the patent: **01.11.2023**
(21) Application number: 18191855.8
(22) Date of filing: 30.08.2018
(51) Int. Cl.: H01M 50/20, H01H 9/22, B60L 3/00, H01H 27/06, H01M 10/42, B60L 50/64, H01M 50/262, H01M 50/271, H01M 50/204

(54) **BATTERY STORAGE SYSTEM WITH SECURE ACCESS**
BATTERIESPEICHERSYSTEM MIT SICHEREM ZUGANG
SYSTÈME DE STOCKAGE DE BATTERIE À ACCÈS SÉCURISÉ

(43) Date of publication of application: 04.03.2020
(73) Proprietor: ABB Schweiz AG, 5400 Baden (CH)
(72) Inventor: Traub, Felix, 5413 Birmenstorf (CH)
(74) Representative: Qip Patentanwälte Dr. Kuehn & Partner mbB

(56) References cited:
- CN-A- 105 788 913
- GB-A- 2 107 527
- US-A1- 2010 110 616
- US-B2- 7 142 410

## Description

### FIELD OF THE INVENTION

The invention relates to a battery storage system and a transportation vehicle with such a battery storage system.

### BACKGROUND OF THE INVENTION

Electric batteries, which are usually composed of a plurality of battery cells, are increasingly used in transportation applications. Due to the high power and energy of the battery storage system in such applications, it may be beneficial to add auxiliary electrical components to the battery cells to increase performance, lifetime, and safety of the battery storage system.

Typical auxiliary electrical components, which are added to the battery cells, are, for example, contactors, disconnectors, fuses, current and voltage sensors and/or control boards. In many cases, such electrical components may have a lower lifetime than the battery cells themselves. As an example, when a fuse is activated due to an external short-circuit event, the fuse may need to be replaced in order to take the battery storage system back to operation.

Unlike systems powered from an electrical grid, energy is intrinsically contained in the battery cells, therefore servicing and replacement of parts may be generally more difficult, since service personnel may be exposed to electrical voltage during work.

CN 105 788 913 A relates to an electric train with batteries, with a locking system comprising several keys and door locks for improving the safety for service personal. With a key for a drivers control room, a door for a compartment with a traction battery disconnector can be opened. A key used for locking the traction battery disconnector and a further key for locking a system grounding switch can be used together for unlocking a security key box, in which further keys for high voltage equipment cabinet doors are locked.

GB 2 107 527 A describes a transformer take-off cabinet, which has a door and an openable roof. The roof is locked by a lock and a key for the lock is provided in a repository, which only can be opened, when removable parts of load break connectors are removed.

### DESCRIPTION OF THE INVENTION

It is an objective of the invention to provide a safer and easier way to maintain and/or service a battery storage system.

This objective is achieved by the subject-matter of the independent claims. Further exemplary embodiments are evident from the dependent claims and the following description.

An aspect of the invention relates to a battery storage system. A battery storage system may comprise a plurality of electrically interconnected battery cells and further electric equipment for charging, discharging and/or controlling the battery cells.

The battery storage system may be designed for high-power applications, such as transportation and/or power quality. Here, high power may refer to currents of more than 10 A and/or voltages of more than 60 V.

According to an embodiment of the invention, the battery storage system comprises a battery compartment, an electrical component compartment, a first disconnector compartment and optionally a second disconnector compartment. All these compartments may be mechanically interconnected and/or may have a common frame. They all may be provided as separated parts of a cabinet.

Each compartment may be accessible by a separate door, which prevents access to the components in the interior of the compartment, in particular, when they are on potential. When the respective door is closed, the components in each compartment may be protected from being touched by a person.

In the battery storage system, a locking system of one or more mechanical locks is implemented, which may solely allow to access the compartments in a specific sequence to reduce electrical risks for service personnel.

The battery compartment accommodates a plurality of battery cells. These battery cells may be electrically connected in series and/or in parallel and may store the electrical energy provided by the battery storage system. Here and in the following, "accommodated" may mean that the battery cells are mechanically connected to the interior of the compartment.

The electrical component compartment accommodates electrical components electrically connectable with the battery cells. For example, the battery cells may be connected to electrical components such as fuses, connectors, etc. In general, the electrical components in the electrical component compartment may comprise components that may have to be maintained and/or exchanged more often than the battery cells.

The disconnector compartment accommodates a disconnector for electrically connecting the electrical components to an electrical energy source in a closed position and for electrically disconnecting the electrical components from the energy source in an opened position. The energy source may be the battery cells or may be an external electrical energy source, such as an electrical grid. The disconnector may be a mechanical switch, which manually may be moved from the opened to the closed position and vice versa. It may be that the disconnector connects and disconnects two or more lines.

The electrical component compartment comprises a door for accessing the electrical components, wherein the door comprises a lock openable and closable by a key. Furthermore, the disconnector compartment accommodates a locking mechanism for releasing the key, when the disconnector is in the opened position.

In such a way, the electrical components are disconnected from the energy source, before the door for accessing the electrical components can be opened. A service technician is forced to open the disconnector, before he can use the key to open the electrical components compartment.

The battery storage system may be serviced, in particular, by replacing protection devices such as contactors or fuses, with minimum electrical risks to service personnel. The battery storage system is decomposed into several compartments, with at least one compartment for the battery cells, a compartment for electrical components, such as fuses, contactors, charging resistors, and a disconnector compartment with a disconnector to electrically connect or disconnect the electrical components from an energy source.

Servicing and replacement of auxiliary components may be performed without electrical risks to service personnel. During service and replacement, service personnel does not need to wear gloves or other protective clothing against voltage. Servicing of the battery storage system may be performed faster and easier. In particular, service personnel does not need to be trained for working while exposed to dangerous voltages.

Furthermore, different degrees of environmental protection may be applied for the different compartments, depending on the requirements of the components in the compartments. Also, components which cause pollution (such as conducting dust generated by contactors) may be separated from components which are sensitive to pollution, such as battery modules. In such a way, the battery compartment may be kept clean. Battery cells and/or battery modules may be designed for lower pollution degree, thus smaller and lighter.

It has to be noted that not all electrical connections between the compartments necessarily need to be disconnected to establish safe working conditions. As an example, when sufficient insulation is applied on a signal line, the signal line does not need to be disconnected during service.

According to an embodiment of the invention, the key is solely removable from the locking mechanism, when the disconnector is in the opened position. In other words, the key is not removable from the locking mechanism, when the disconnector is in the closed position. In such a way, a service technician has to disconnect the electrical components from the energy source, before he can remove the key from the locking mechanism.

According to an embodiment of the invention, the key is solely removable from the lock, when the door of the compartment is closed. In this case, it may be even not possible that the service technician reconnects the electrical components, before the door is closed.

According to an embodiment of the invention, the disconnector has a lever, which is solely movable from the closed position into the opened position, when the key is inserted into the locking mechanism. At the beginning of service, the service technician may move the disconnector with the lever into the opened position. Then he may take the key and open the electrical component compartment.

According to an embodiment of the invention, the lever is solely movable from the opened position into the closed position, when the key is inserted into the locking mechanism. For connecting the electrical components to the energy source, the service technician needs the key for inserting it into the locking mechanism, such that he can move the lever into the closed position. In such a way, he is reminded to close the door of the electrical component compartment.

According to an embodiment of the invention, the locking mechanism is a lock for a lever of the disconnector. The lock may be designed, such that the lever only can be moved, when the key is inserted into the lock.

According to an embodiment of the invention, the key is solely removable from the lock, when the lever is in the opened position. The lock furthermore may be designed, such that it retains the key, when the lever is in the closed position and/or in positions between the opened position and the closed position.

According to an embodiment of the invention, the locking mechanism comprises a hatch, which is solely openable, when a lever of the disconnector is in the opened position. In the closed position, the handle of the lever may protrude over the hatch, such that then opening of the hatch is prevented. The key may be accommodated behind the hatch. Thus, the key only may be removed from the space behind the hatch, when the lever has been turned into the opened position.

According to an embodiment of the invention, the hatch has a lock, which is solely accessible, when the hatch is opened, wherein the hatch is solely closable, when the key is in the lock of the hatch. Thus, the service technician is reminded to close the door of the electrical component compartment, before he moves the disconnector into the closed position.

According to an embodiment of the invention, the opened hatch prevents the lever of the disconnector to be moved into the closed position. For example, the opened hatch may be positioned besides the lever, such that a handle of the lever is blocked by the opened hatch. This also reminds a service technician to close the door of the electrical components compartment.

According to an embodiment of the invention, the energy source are the battery cells. In the case, when the battery storage system is already disconnected from an external energy source, such as a catenary line, it only may be necessary to disconnect the electrical components in the electrical component compartment from the battery cells.

According to an embodiment of the invention, the energy source is an external energy source, for example the output of a converter interfacing to an external grid. It also may be possible that the battery storage system is disconnected from the external energy source and such that the battery cells are disconnected from the electrical components in another way.

According to the invention, the battery compartment comprises a door for accessing the battery cells, wherein the door comprises a lock openable and closable by the key. The battery compartment may be accessible with the same key, with which the electrical component compartment may be opened. The key may be solely removable from the lock, when the door of the battery compartment is closed.

According to an embodiment of the invention, the electrical components in the electrical component compartment comprises at least one of: a fuse, a connector, a control board, a voltage and/or current measurement device. In general, the electrical components may be or may comprise components, which need service, maintenance more often as the battery cells.

As already mentioned, the battery storage system may have two disconnector compartments. One disconnector may be used for disconnecting the battery cells from the electrical components. Another disconnector may be used for disconnecting an external energy source from the electrical components.

The disconnector compartment mentioned above may be seen as a first disconnector compartment, its disconnector as a first disconnector and its key as a first key.

According to an embodiment of the invention, the battery storage system further comprises a second disconnector compartment accommodating a second disconnector for electrically connecting the electrical components to a second energy source in a closed SY position and for electrically disconnecting the electrical components from a second energy source in an opened position. The second disconnector may be designed like the first disconnector.

According to an embodiment of the invention, the first disconnector compartment comprises a door for accessing the first disconnector, wherein the door of the first disconnector compartment comprises a lock openable and closable by a second key. The second disconnector compartment may accommodate a second locking mechanism for releasing the second key, when the second disconnector is in the opened position.

In such a way, the first disconnector compartment can be opened and/or closed like the electrical component compartment. A second key may be provided in the second disconnector compartment, like the first key in the first disconnector compartment.

The second locking mechanism may be designed like the first locking mechanism.

According to an embodiment of the invention, the first energy source are the battery cells and the second energy source is an external energy source. It may be that the battery cells are disconnected from the electrical components in a first step and that the external energy source is disconnected from the electrical components in a second step. The order of the steps may be forced by the locking system with the two keys and the two locking mechanisms.

According to an embodiment of the invention, the first energy source is an external energy source and the second energy source are the battery cells. It also may be that the external energy source is disconnected from the electrical components in a first step and that the battery cells are disconnected from the electrical components in a second step. Again, the order of the steps may be forced by the locking system with the two keys and the two locking mechanisms.

A further aspect of the invention relates to a transportation vehicle, such as an electric car, an electric bus, an electric tram and/or an electric railway vehicle, which comprises a battery storage system as described above and below. The battery storage system may be integrated in the transportation vehicle.

According to an embodiment of the invention, the transportation vehicle comprises a drivetrain, such as one or more electrical motors, suppliable by the battery storage system. For example, the transportation vehicle may be supplied by the battery energy storage system, when no power from an external power source, such as a catenary line, is present.

According to an embodiment of the invention, the transportation vehicle is suppliable from an electrical grid as energy source during operation of the drive. For example, a train, tram or bus as transportation vehicle may be supplied from an electrical grid, for example via a catenary line. Dependent on the power available, the battery storage system may be charged during operation of the drive.

The transportation vehicle also may be hybrid train that additionally has a fuel powered engine. In this case, the battery storage system may be charged during braking.

In summary, subsystems of the battery storage system, such as the battery cells and the electrical components, may be integrated in separate compartments, which can be accessed by separate doors. Using an access and/or locking system, it is only possible to access potentially dangerous compartments, such as the electrical component compartment with parts for regular service, after it has been disconnected from the subsystem with the battery cells and optionally after external connections to an external energy source have been either disconnected or grounded. The access system may be implemented by a series of locks and keys, where keys are released only after some required action has been performed.

In the same way, the access system may also prevent service personnel from connecting the electrical components back to a dangerous voltage before the electrical component compartment has been closed and thereby is protected from contact by service personnel.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a transportation vehicle according to an embodiment of the invention.
Fig. 2 schematically shows a front view of a battery storage system according to an embodiment of the invention.
Fig. 3 schematically shows an interior view of the battery storage system of Fig. 2.
Fig. 4A shows a locking mechanism for a battery storage system according to an embodiment of the invention.
Fig. 4B shows the locking mechanism of Fig. 4A in an opened position.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

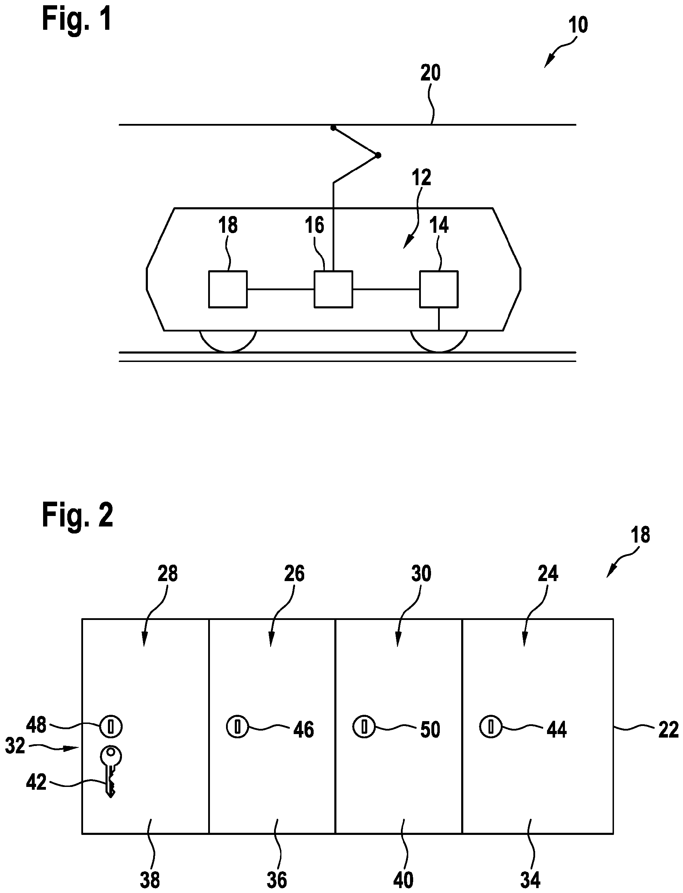

Fig. 1 shows a transportation vehicle 10 in the form of a railway vehicle. In general, the transportation vehicle 10 also may be a street vehicle, such as a bus. The railway vehicle, such as a train or tram, comprises a drivetrain 12 with an electrical motor 14, which drives a wheel of the transportation vehicle 10. The drivetrain 12 furthermore comprises an electrical converter 16, which is adapted for generating an AC current supplied to the electrical motor 14. The converter 16 may be powered from a battery storage system 18 and/or an external electrical energy source 20, such as a catenary line of an AC or DC grid.

It may be that the battery storage system 18 is charged from the external energy source 20 and is then used, when no external energy source 20 is viable, which may be the case at specific sections of the railways. It also may be that the battery storage system 18 is charged during operation of the drivetrain 12 and the electrical motor 14 and/or that the battery storage system 18 supports the external energy source 20, dependent on the availability of power from the extern energy source 20.

Fig. 2 shows a front view of a cabinet 22 housing the battery storage system 18. The cabinet 22 comprises four compartments, i.e. a battery compartment 24, an electrical component compartment 26 and two disconnector compartments 28, 30.

The battery storage system 18 has a locking system 32, which comprises several keys and locks. In Fig. 2 it is shown that every compartment 24, 26, 28, 30 has a door 34, 36, 38, 40 with a lock 44, 46, 48, 50.

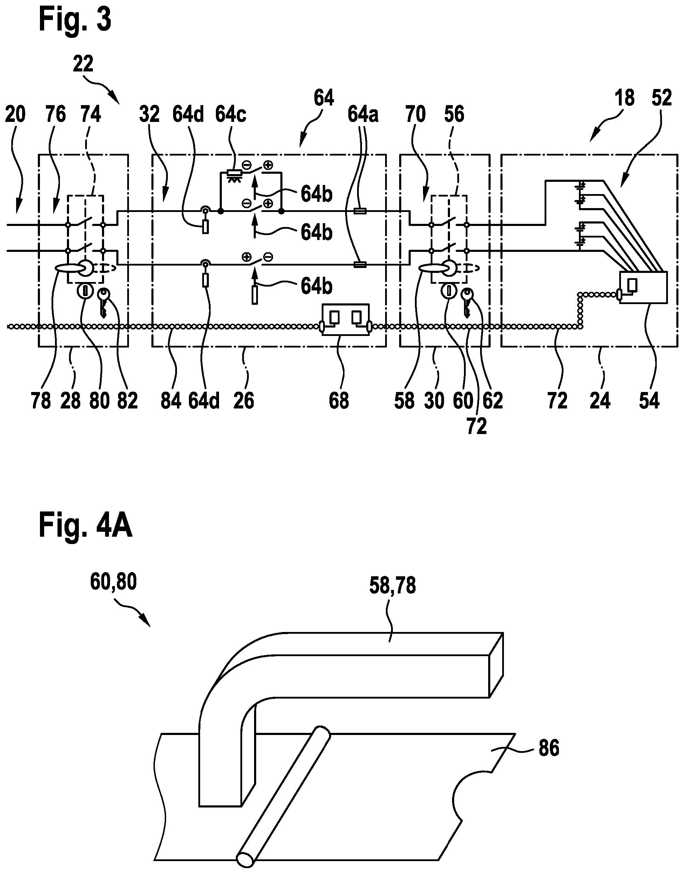

Furthermore, a key 42 of the locking system 32 is shown, which may be kept outside of the compartments 24, 26, 28, 30. Further keys of the locking system 32 are provided inside the compartments, as will be explained with respect to Fig. 3.

The key 42 and the lock 48 are optional. It also may be that the disconnector compartment 28 has a door 34, which may be opened and closed without a key.

Fig. 3 schematically shows the interior of the cabinet 22.

The battery compartment 24 comprises a plurality of battery cells 52, which are used as power storage of the battery storage system 18. As shown, the battery cells 52, which may be assembled into modules, may be connected in series. However, also other connections are possible. The battery compartment 24 furthermore may comprise a control and/or measurement device 54, which, for example, measures and controls voltages across the battery cells 52.

The disconnector compartment 30 comprises a disconnector 56, which may be a mechanical switch adapted for disconnecting and connecting a power line 70 between the battery compartment 24 and the electrical component compartment 26. For example, the disconnector 56 may be operated manually with a lever 58.

The disconnector 56 and/or the lever 58 may be moved between an opened position and a closed position. Furthermore, a locking mechanism 60, such as a lock, and a key 62 are provided in the disconnector compartment 30.

The electrical component compartment 26 comprises electrical components 64, which have to be maintained and/or serviced more often as the battery cells 52. For example, the electrical components may comprise fuses 64a, electrical connectors 64b, a recharging resistor 64c and sensors 64d. The electrical component compartment 26 furthermore may comprise a control and/or measurement device 68, which, for example, processes signals from the sensors 64d and/or controls the electrical connectors 64b.

The electrical components 64 may be connected via a power line 70 with the battery cells 52. The disconnector 56 may be adapted for disconnecting the power line 70.

The control and/or measurement devices 54, 68 may be connected with a signal line 72. It has to be noted that the signal line 72 may or may not be interrupted by the disconnector 56. In the latter case, sufficient insulation may need to be applied to the measurement devices 54 so that the control and/or measurement device 68 is insulated from dangerous voltages.

The disconnector compartment 28 comprises a disconnector 74, which may be a mechanical switch adapted for disconnecting and connecting a power line 76 between an external energy source 20 and the electrical component compartment 26. For example, the disconnector 74 may be operated manually with a lever 78.

The disconnector 74 and/or the lever 78 may be moved between an opened position and a closed position. Furthermore, a locking mechanism 80, such as a lock, and a key 82 are provided in the disconnector compartment 28.

The control and/or measurement device 68 may be connected with a signal line 84 to an outside of the battery storage system 18. It has to be noted that the signal line 84 may be guided through the disconnector compartment 28 and/or that the disconnector 74 may not interrupt the signal line 84.

With the locking system 32, which comprises the locks 44, 46, 48, 50, the locking mechanisms 60, 80 and the keys 42, 62, 82, a controlled access sequence or access method may be performed by a service technician, which may establish a mistake-proof servicing concept.

The first key 42 allows opening of the disconnector compartment 28 by opening the lock 48 of the door 38. The battery storage system 18, and in particular the electrical components 64, may be disconnected from the external energy source 20 with the disconnector 74. The locking mechanism 80 mechanically interconnected with the disconnector 74 releases the second key 82, when the disconnector 74 has been moved into the opened position.

With the second key 82, the look 50 of the door 40 of the disconnector compartment 30 can be opened. The battery cells 52 then may be disconnected from the external energy source 20 with the disconnector 56. The locking mechanism 60 mechanically interconnected with the disconnector 74 releases then the third key 62, when the disconnector 56 has been moved into the opened position.

The third key 62 allows opening the electrical component compartment 26 by opening the lock 46 of the door 46? and optionally allows opening the battery compartment 24 by opening the lock 44 of the door 34.

The locking mechanisms 60, 80 may prevent that disconnectors 56, 74 may be moved into the closed position, when the corresponding keys 62, 82 are put back into the release mechanism.

Performing the above steps in reverse order may allow taking the battery storage system 18 safely back into operation.

In an alternative embodiment, the order in which the disconnector compartments 28, 30 are opened are exchanged. The lock 50 of the disconnector compartment 30 may be opened with the first key 42. In this embodiment, the key 62 is the second key. The second key 62 then may be released, when the disconnector 56 is moved in the opened position. Then the lock 48 of the disconnector compartment 28 may be opened with the second key 62. The third key 82 then may be released, when the disconnector 74 is moved in the opened position. The lock 46 of the door 36 of the electrical component compartment 26 then may be opened with the third key 82.

Furthermore, it may be that the locks 44, 46, 48, 50 are designed such that the corresponding keys 42, 62, 82 only may be removed from the lock, when the corresponding door is closed and/or locked. In particular, this may be the case for the lock 46 of the electrical component compartment 26 and/or the lock 44 of the battery compartment 24.

The disconnectors 56, 74 and the locking mechanisms 60, 80 both may be designed equally. Only the keys 62, 82 released by the specific locking mechanisms 60, 80 may be different.

The keys 62, 82 may be solely removable from the locking mechanisms 60, 80, when the disconnectors 56, 74 are in the opened position.

The levers 58, 78 of the disconnectors 56, 74 may be solely movable from the closed position into the opened position, when the keys 62, 82 are inserted into the respective locking mechanism 60, 80. Furthermore, the levers 58, 78 may be solely movable from the opened position into the closed position, when the respective key 62, 82 is inserted into the respective locking mechanism 60, 80.

In one embodiment, the locking mechanisms 60, 80 may be a lock for the respective lever 58, 78 of the disconnector 56, 74. In this case, the keys 62, 82 may be solely removable from the lock, when the respective lever 58, 78 is in the opened position.

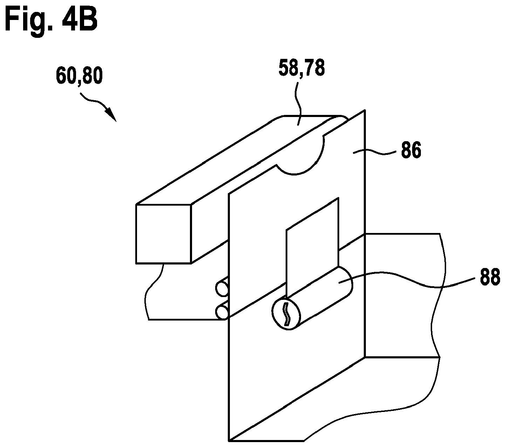

A further embodiment of the locking mechanism 60, 80 is shown in Fig. 4A and Fig. 4B. Fig. 4A shows the locking mechanism 60, 80 in an opened position. The locking mechanism 60, 80 comprises a hatch 86, which is solely openable, when the lever 58, 78 of the disconnector 56, 74 is in the opened position. For example, the handle of the lever 58, 78 may protrude over the hatch 86, such that then an opening of the hatch 86 is prevented. The key 62, 82 may be accommodated behind the hatch 86, for example in a compartment closed by the hatch 86. Thus, the key 62, 82 only may be removed from the compartment behind the hatch 86, when the lever 58, 78 has been turned into the opened position.

Fig. 4B shows the hatch 86 in an opened position. The hatch 86 has a lock 88, which is solely accessible, when the hatch 86 is opened. The key 62, 82 may be inserted into this lock 88. The hatch 86 may be solely closable, when the key 62, 82 is in the lock 88 of the hatch 86. It also may be that the opened hatch 86 prevents the lever 58, 78 of the disconnector 56, 74 to be moved into the closed position. For example, the opened hatch 86 may be positioned besides the lever 58, 78, such that the handle of the lever 58, 78 is blocked by the opened hatch 86. When the key 62, 82 is removed from the compartment behind the hatch 86, the hatch 86 may be locked in position to prevent the disconnector 56, 74 from being closed.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: transportation vehicle
- 12: drive
- 14: electrical motor
- 16: electrical converter
- 18: battery storage system
- 20: external electrical energy source
- 22: cabinet
- 24: battery compartment
- 26: electrical component compartment
- 28: disconnector compartment
- 30: disconnector compartment
- 32: locking system
- 34: door
- 36: door
- 38: door
- 40: door
- 42: key
- 44: lock
- 46: lock
- 48: lock
- 50: lock
- 52: battery cell
- 54: control and/or measurement device
- 56: disconnector
- 58: lever
- 60: locking mechanism
- 62: key
- 64: electrical component
- 64a: fuse
- 64b: electrical connector
- 64c: recharging resistor
- 64d: sensor
- 70: power line
- 72: signal line
- 74: disconnector
- 76: power line
- 78: lever
- 80: locking mechanism
- 82: key
- 84: signal line
- 86: hatch
- 88: lock

## Claims

1. A battery storage system (18), comprising:
a battery compartment (24) accommodating a plurality of battery cells (52);
an electrical component compartment (26) accommodating electrical components (64) electrically connectable with the battery cells (52);
at least one disconnector compartment (28, 30) accommodating a disconnector (56, 74) for electrically connecting the electrical components (64) to an electrical energy source (20, 52) in a closed position and for electrically disconnecting the electrical components (64) from the energy source (20,52) in an opened position;
wherein the disconnector compartment (28, 30) accommodates a locking mechanism (60, 80) for releasing a key (62, 82), when the disconnector (56, 74) is in the opened position;
wherein the electrical component compartment (26) comprises a first door (36) for accessing the electrical components (64) and the first door (36) comprises a first lock (46) openable and closable by the key (62, 82);
wherein the battery compartment (24) comprises a second door (34) for accessing the battery cells (52) and the second door (34) comprises a second lock (44) openable and closable by the key (62, 82).

2. The battery storage system (18) of claim 1,
wherein the key (62, 82) is solely removable from the locking mechanism (60, 80), when the disconnector (56, 74) is in the opened position.

3. The battery storage system (18) of claim 1 or 2,
wherein the key (62, 82) is solely removable from the first lock (46) when the first door (36) is closed.

4. The battery storage system (18) of one of the previous claims,
wherein the key (62, 82) is solely removable from the second lock (44) when the second door (34) is closed.

5. The battery storage system (18) of one of the previous claims,
wherein the disconnector (56, 74) has a lever (58, 78), which is solely movable from the closed position into the opened position, when the key (62, 82) is inserted into the locking mechanism (60, 80); and/or
wherein the lever (58, 78) is solely movable from the opened position into the closed position, when the key (62, 82) is inserted into the locking mechanism (60, 80).

6. The battery storage system (18) of one of the previous claims,
wherein the locking mechanism (60, 80) is a lock for a lever (58, 78) of the disconnector (56, 74);
wherein the key (62, 82) is solely removable from the lock, when the lever (58, 78) is in the opened position.

7. The battery storage system (18) of one of the previous claims,
wherein the locking mechanism (60, 80) comprises a hatch (86), which is solely openable, when a lever (58, 78) of the disconnector (56, 74) is in the opened position;
wherein the key (62, 82) is accommodated behind the hatch (86).

8. The battery storage system (18) of claim 5,
wherein the hatch (86) has a lock (88), which is solely accessible, when the hatch (86) is opened;
wherein the hatch (86) is solely closable, when the key (62, 82) is in the lock (88) of the hatch (86);
wherein the opened hatch (86) prevents the lever (58, 78) of the disconnector (56, 74) to be moved into the closed position.

9. The battery storage system (18) of one of the previous claims,
wherein the energy source are the battery cells (52); or
wherein the energy source is an external electrical energy source (20).

10. The battery storage system (18) of one of the previous claims,
wherein the electrical components (64) in the electrical component compartment (26) comprise at least one of:
a fuse (64a),
a connector (64b),
a voltage and/or current measurement device (68).

11. The battery storage system (18) of one of the previous claims,
wherein the disconnector compartment is a first disconnector compartment (30), the disconnector (56) is a first disconnector and the key (62) is a first key;
wherein the battery storage system (18) further comprises:
a second disconnector compartment (28) accommodating a second disconnector (74) for electrically connecting the electrical components (64) to a second electrical energy source (20) in a closed position and for electrically disconnecting the electrical components (64) from a second energy source (20) in an opened position;
wherein the first disconnector compartment (30) comprises a door (40) for accessing the first disconnector (56);
wherein the door (40) of the first disconnector compartment (30) comprises a lock (50) openable and closable by a second key (82);
wherein the second disconnector compartment (28) accommodates a second locking mechanism (80) for releasing the second key (82), when the second disconnector (74) is in the opened position.

12. The battery storage system (18) of claim 11,
wherein the first energy source are the battery cells (52) and the second energy source is an external energy source (20).

13. The battery storage system (18) of claim 11,
wherein the first energy source is an external energy source (20) and the second energy source are the battery cells (52).

14. A transportation vehicle (10), comprising:
the battery storage system (18) according to one of the previous claims;
a drivetrain (12) suppliable by the battery storage system (18).

15. The transportation vehicle (10) of claim 14,
wherein the transportation vehicle (10) is suppliable from an electrical grid (20) as energy source during operation of the drivetrain (12).

## Patentansprüche

1. Batteriespeichersystem (18), umfassend:
ein Batteriefach (24), das eine Mehrzahl von Batteriezellen (52) aufnimmt;
ein Fach (26) für elektrische Komponenten, das elektrische Komponenten (64) aufnimmt, die elektrisch mit den Batteriezellen (52) verbindbar sind;
mindestens ein Trennschalterfach (28, 30), das einen Trennschalter (56, 74) zum elektrischen Verbinden der elektrischen Komponenten (64) mit einer elektrischen Energiequelle (20, 52) in einer geschlossenen Position und zum elektrischen Trennen der elektrischen Komponenten (64) von der Energiequelle (20, 52) in einer geöffneten Position aufnimmt;
wobei das Trennschalterfach (28, 30) einen Schließmechanismus (60, 80) zum Freigeben eines Schlüssels (62, 82) aufnimmt, wenn sich der Trennschalter (56, 74) in der geöffneten Position befindet;
wobei das Fach (26) für elektrische Komponenten eine erste Tür (36) zum Zugreifen auf die elektrischen Komponenten (64) umfasst und die erste Tür (36) ein erstes Schloss (46) umfasst, das durch den Schlüssel (62, 82) öffenbar und schließbar ist;
wobei das Batteriefach (24) eine zweite Tür (34) zum Zugreifen auf die Batteriezellen (52) umfasst und die zweite Tür (34) ein zweites Schloss (44) umfasst, das durch den Schlüssel (62, 82) öffenbar und schließbar ist.

2. Batteriespeichersystem (18) nach Anspruch 1,
wobei der Schlüssel (62, 82) nur dann aus dem Schließmechanismus (60, 80) entfernbar ist, wenn sich der Trennschalter (56, 74) in der geöffneten Position befindet.

3. Batteriespeichersystem (18) nach Anspruch 1 oder 2,
wobei der Schlüssel (62, 82) nur dann aus dem ersten Schloss (46) entfernbar ist, wenn die erste Tür (36) geschlossen ist.

4. Batteriespeichersystem (18) nach einem der vorhergehenden Ansprüche,
wobei der Schlüssel (62, 82) nur dann aus dem zweiten Schloss (44) entfernbar ist, wenn die zweite Tür (34) geschlossen ist.

5. Batteriespeichersystem (18) nach einem der vorhergehenden Ansprüche,
wobei der Trennschalter (56, 74) einen Hebel (58, 78) aufweist, der nur dann von der geschlossenen Position in die geöffnete Position bewegbar ist, wenn der Schlüssel (62, 82) in den Schließmechanismus (60, 80) eingesetzt ist; und/oder
wobei der Hebel (58, 78) nur dann von der geöffneten Position in die geschlossene Position bewegbar ist, wenn der Schlüssel (62, 82) in den Schließmechanismus (60, 80) eingesetzt ist.

6. Batteriespeichersystem (18) nach einem der vorhergehenden Ansprüche,
wobei der Schließmechanismus (60, 80) ein Schloss für einen Hebel (58, 78) des Trennschalters (56, 74) ist;
wobei der Schlüssel (62, 82) nur dann aus dem Schloss entfernbar ist, wenn sich der Hebel (58, 78) in der geöffneten Position befindet.

7. Batteriespeichersystem (18) nach einem der vorhergehenden Ansprüche,
wobei der Schließmechanismus (60, 80) eine Klappe (86) umfasst, die nur dann öffenbar ist, wenn sich ein Hebel (58, 78) des Trennschalters (56, 74) in der geöffneten Position befindet;
wobei der Schlüssel (62, 82) hinter der Klappe (86) aufgenommen ist.

8. Batteriespeichersystem (18) nach Anspruch 5,
wobei die Klappe (86) ein Schloss (88) aufweist, das nur dann zugreifbar ist, wenn die Klappe (86) geöffnet ist;
wobei die Klappe (86) nur dann schließbar ist, wenn sich der Schlüssel (62, 82) in dem Schloss (88) der Klappe (86) befindet;
wobei die geöffnete Klappe (86) verhindert, dass der Hebel (58, 78) des Trennschalters (56, 74) in die geschlossene Position bewegt wird.

9. Batteriespeichersystem (18) nach einem der vorhergehenden Ansprüche,
wobei die Energiequelle die Batteriezellen (52) sind; oder
wobei die Energiequelle eine externe elektrische Energiequelle (20) ist.

10. Batteriespeichersystem (18) nach einem der vorhergehenden Ansprüche,
wobei die elektrischen Komponenten (64) in dem Fach (26) für elektrische Komponenten mindestens eines von Folgendem umfassen:
eine Sicherung (64a),
einen Verbinder (64b),
eine Spannungs- und/oder Strommessvorrichtung (68).

11. Batteriespeichersystem (18) nach einem der vorhergehenden Ansprüche,
wobei das Trennschalterfach ein erstes Trennschalterfach (30) ist, der Trennschalter (56) ein erster Trennschalter ist und der Schlüssel (62) ein erster Schlüssel ist;
wobei das Batteriespeichersystem (18) ferner Folgendes umfasst:
ein zweites Trennschalterfach (28), das einen zweiten Trennschalter (74) zum elektrischen Verbinden der elektrischen Komponenten (64) mit einer zweiten elektrischen Energiequelle (20) in einer geschlossenen Position und zum elektrischen Trennen der elektrischen Komponenten (64) von einer zweiten Energiequelle (20) in einer geöffneten Position aufnimmt;
wobei das erste Trennschalterfach (30) eine Tür (40) zum Zugreifen auf den ersten Trennschalter (56) umfasst;
wobei die Tür (40) des ersten Trennschalterfachs (30) ein Schloss (50) umfasst, das durch einen zweiten Schlüssel (82) öffenbar und schließbar ist;
wobei das zweite Trennschalterfach (28) einen zweiten Schließmechanismus (80) zum Freigeben des zweiten Schlüssels (82) aufnimmt, wenn sich der zweite Trennschalter (74) in der geöffneten Position befindet.

12. Batteriespeichersystem (18) nach Anspruch 11,
wobei die erste Energiequelle die Batteriezellen (52) sind und die zweite Energiequelle eine externe Energiequelle (20) ist.

13. Batteriespeichersystem (18) nach Anspruch 11,
wobei die erste Energiequelle eine externe Energiequelle (20) ist und die zweite Energiequelle die Batteriezellen (52) sind.

14. Transportfahrzeug (10), umfassend:
das Batteriespeichersystem (18) nach einem der vorhergehenden Ansprüche;
einen Antriebsstrang (12), der durch das Batteriespeichersystem (18) versorgbar ist.

15. Transportfahrzeug (10) nach Anspruch 14,
wobei das Transportfahrzeug (10) während eines Betriebs des Antriebsstrangs (12) von einem elektrischen Netz (20) als Energiequelle versorgbar ist.

## Revendications

1. Système de stockage de batterie (18), comprenant :
un compartiment de batterie (24) logeant une pluralité d'éléments de batterie (52) ;
un compartiment de composants électriques (26) logeant des composants électriques (64) pouvant être connectés électriquement aux éléments de batterie (52) ;
au moins un compartiment de sectionneur (28, 30) logeant un sectionneur (56, 74) destiné à connecter électriquement les composants électriques (64) à une source d'énergie électrique (20, 52) dans une position fermée et à déconnecter électriquement les composants électriques (64) de la source d'énergie (20, 52) dans une position ouverte ;
dans lequel le compartiment de sectionneur (28, 30) loge un mécanisme de verrouillage (60, 80) destiné à libérer une clé (62, 82) lorsque le sectionneur (56, 74) est dans la position ouverte ;
dans lequel le compartiment de composants électriques (26) comprend une première porte (36) pour l'accès aux composants électriques (64) et la première porte (36) comprend un premier verrou (46) pouvant être ouvert et fermé par la clé (62, 82) ;
dans lequel le compartiment de batterie (24) comprend une seconde porte (34) pour l'accès aux éléments de batterie (52) et la seconde porte (34) comprend un second verrou (44) pouvant être ouvert et fermé par la clé (62, 82).

2. Système de stockage de batterie (18) selon la revendication 1,
dans lequel la clé (62, 82) ne peut être retirée du mécanisme de verrouillage (60, 80) que lorsque le sectionneur (56, 74) est dans la position ouverte.

3. Système de stockage de batterie (18) selon la revendication 1 ou 2,
dans lequel la clé (62, 82) ne peut être retirée du premier verrou (46) que lorsque la première porte (36) est fermée.

4. Système de stockage de batterie (18) selon l'une quelconque des revendications précédentes,
dans lequel la clé (62, 82) ne peut être retirée du second verrou (44) que lorsque la seconde porte (34) est fermée.

5. Système de stockage de batterie (18) selon l'une quelconque des revendications précédentes,
dans lequel le sectionneur (56, 74) possède un levier (58, 78), qui ne peut être déplacé de la position fermée à la position ouverte que lorsque la clé (62, 82) est insérée dans le mécanisme de verrouillage (60, 80) ; et/ou
dans lequel le levier (58, 78) ne peut être déplacé de la position ouverte à la position fermée que lorsque la clé (62, 82) est insérée dans le mécanisme de verrouillage (60, 80).

6. Système de stockage de batterie (18) selon l'une quelconque des revendications précédentes,
dans lequel le mécanisme de verrouillage (60, 80) est un verrou pour un levier (58, 78) du sectionneur (56, 74) ;
dans lequel la clé (62, 82) ne peut être retirée du verrou que lorsque le levier (58, 78) est dans la position ouverte.

7. Système de stockage de batterie (18) selon l'une quelconque des revendications précédentes,
dans lequel le mécanisme de verrouillage (60, 80) comprend une trappe (86), qui ne peut être ouverte que lorsqu'un levier (58, 78) du sectionneur (56, 74) est dans la position ouverte ;
dans lequel la clé (62, 82) est logée derrière la trappe (86).

8. Système de stockage de batterie (18) selon la revendication 5,
dans lequel la trappe (86) possède un verrou (88), qui n'est accessible que lorsque la trappe (86) est ouverte ;
dans lequel la trappe (86) ne peut être fermée que lorsque la clé (62, 82) est dans le verrou (88) de la trappe (86) ;
dans lequel la trappe ouverte (86) empêche le levier (58, 78) du sectionneur (56, 74) d'être déplacé dans la position fermée.

9. Système de stockage de batterie (18) selon l'une quelconque des revendications précédentes,
dans lequel la source d'énergie est constituée des éléments de batterie (52) ; ou
dans lequel la source d'énergie est une source d'énergie électrique externe (20).

10. Système de stockage de batterie (18) selon l'une quelconque des revendications précédentes,
dans lequel les composants électriques (64) dans le compartiment de composants électriques (26) comprennent au moins l'un des dispositifs suivants :
un fusible (64a),
un connecteur (64b),
un dispositif de mesure de tension et/ou de courant (68) .

11. Système de stockage de batterie (18) selon l'une quelconque des revendications précédentes,
dans lequel le compartiment de sectionneur est un premier compartiment de sectionneur (30), le sectionneur (56) est un premier sectionneur et la clé (62) est une première clé ;
dans lequel le système de stockage de batterie (18) comprend en outre :
un second compartiment de sectionneur (28) logeant un second sectionneur (74) destiné à connecter électriquement les composants électriques (64) à une seconde source d'énergie électrique (20) dans une position fermée et à déconnecter électriquement les composants électriques (64) d'une seconde source d'énergie (20) dans une position ouverte ;
dans lequel le premier compartiment de sectionneur (30) comprend une porte (40) pour l'accès au premier sectionneur (56) ;
dans lequel la porte (40) du premier compartiment de sectionneur (30) comprend un verrou (50) pouvant être ouvert et fermé par une seconde clé (82) ;
dans lequel le second compartiment de sectionneur (28) loge un second mécanisme de verrouillage (80) destiné à libérer la seconde clé (82), lorsque le second sectionneur (74) est dans la position ouverte.

12. Système de stockage de batterie (18) selon la revendication 11,
dans lequel la première source d'énergie est constituée des éléments de batterie (52) et la seconde source d'énergie est une source d'énergie externe (20).

13. Système de stockage de batterie (18) selon la revendication 11,
dans lequel la première source d'énergie est une source d'énergie externe (20) et la seconde source d'énergie est constituée des éléments de batterie (52).

14. Véhicule de transport (10), comprenant :
le système de stockage de batterie (18) selon l'une quelconque des revendications précédentes ;
une transmission (12) pouvant être alimentée par le système de stockage de batterie (18).

15. Véhicule de transport (10) selon la revendication 14,
dans lequel le véhicule de transport (10) peut être alimenté par un réseau électrique (20) en tant que source d'énergie pendant le fonctionnement de la transmission (12) .
